(19) Europäisches Patentamt
European Patent Office
Office européen des brevets

(11) **EP 2 150 915 B1**

(12) **EUROPEAN PATENT SPECIFICATION**

(45) Date of publication and mention
of the grant of the patent:
**20.10.2010  Bulletin 2010/42**

(51) Int Cl.:
***G06F 21/20*** *(2006.01)*

(21) Application number: **08734567.4**

(86) International application number:
**PCT/DK2008/050112**

(22) Date of filing: **19.05.2008**

(87) International publication number:
**WO 2008/145132 (04.12.2008 Gazette 2008/49)**

(54) **SECURE LOGIN PROTOCOL**

SICHERES LOGIN-PROTOKOLL

PROTOCOLE D'OUVERTURE DE SESSION SÉCURISÉE

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **30.05.2007  DK 200700781**
**30.05.2007  US 940801 P**

(43) Date of publication of application:
**10.02.2010  Bulletin 2010/06**

(73) Proprietor: **Pamci Networks Denmark APS 8320 Marslet (DK)**

(72) Inventor: **CHRISTOPHANI, Claus, Ambjørn DK-8220 Brabrand (DK)**

(74) Representative: **Sørensen, Peter et al Plougmann & Vingtoft A/S Sundkrogsgade 9 P.O. Box 831 2100 Copenhagen Ø (DK)**

(56) References cited:
**US-A- 4 679 236          US-A- 6 148 406
US-A1- 2004 080 529     US-A1- 2004 133 778**

## Description

### Field of the invention

The invention relates to authentication of a user before a server.

### Background of the invention

The Internet comprises a vast number of online services which client users can log in to. The individual client user's access to an online service is most often dependent on a login, which traditionally consists of a 'username' and a 'password'. Username and password are to be seen as two keys, which when used in joint 'opens' an online service to the client user, if the server system behind the online system 'finds' the client user's username and password on the list of clients who have a right to access the online service.

If a server system depends on two criteria for login like 'username' and 'password' alone, it will grant access to a client user who is submitting a valid 'username' and 'password' to the server system. This means that if the client user loses his username and password to a given online service, a finder of the username and password will be able to access that online service.

Most often client users lose their username and password to illegal programs that are, without the client user's acceptance, stored at the user's computer and from there logs the user's keystrokes when he is in the process of logging onto a specific online service. The collected keystrokes are then sent by the illegal program via the Internet to unauthorized individuals who may then gain access to the online service.

Patent US 6148496 discloses a method for securing the access to a device. The user is presented with random character strings, based on which she must transform her password before input in the device. This way the characters typed by the user are different for each attempt.

Patent application US 2004/0080529 discloses a method and system for protecting against keystroke logging malware by using a script-based graphical keyboard to enter user-id and password information.

Patent application US 2004/0133778 discloses a system an method for securing the input of passwords by providing a virtual key-pad on the screen that the user may use to input secure information. The information is mapped according to an alternative character set associated to the virtual key-pad and then encrypted for secure communication to a remote server.

### Summary of the invention

The present invention facilitates secure authentication of a user on a server computer. This is useful for instance as part of a homebanking login procedure.

A first aspect of the invention is a method for providing a secret at a client computer for use in an authentication process. The method comprises:

- the client computer receiving from a server computer, information representing

    ○ a first set of data elements, and
    ○ a second set of data elements, and
    ○ a data association between the first set and the second set, through which data association a data element from the first set is uniquely associated with a data element in the second set;

- providing a first subset comprising a selection of data elements from the first set of data elements;
- the client computer providing a second subset of data elements, the second subset comprising those data elements in the second set of data elements that are associated with the data elements in the first subset via said data association;
- providing the secret by evaluating an encryption algorithm that depends on an element from the second subset and a predefined encryption data element. characterised in that:

    ○ at least a part of said data association is presented via a first user interface;
    ○ said provision of a selection of data elements from the first set of data elements is performed by a user in response to said presenting.

The first set of data elements could be a set of pictures or a set of audio files or other information. The second set of data elements could for instance be a set of integer numbers. In this scenario, the data association could be a numeration of the images. The server computer provides the data association. The information, comprising the first set (images, for instance) and the second set (integers, for instance) and the data association (the mapping between the images and the numbers), is sent to the client computer. Advantageously, the server computer forms the data association randomly. The secret will be used as a passkey for logging onto the server computer. Other second sets of data elements could consist of hexadecimal numbers (consisting of combinations of letters A-F and integers 0-9), or could consist of another group of characters from the ASCII character in general. They can all be converted to bit strings and therefore be used in an encryption algorithm.

The number of elements in the first data set might be 100, and it will be clear from an example provided below that the first subset advantageously is a proper subset (of the first set of data elements), meaning that there are elements in the first set that are not comprised in the first subset. (By virtue of the data association being a one-to-one association, the second subset will be a proper subset of the second set of data elements.)

The said information is typically transmitted over the internet and/or other network. In a homebanking scenario, the network typically comprises the Internet.

The encryption algorithm can be selected among many different encryption methods, as will be exemplified below. In the case where images are numerated, the selection will result in a second subset comprising numerals determined via the data association based on the first subset. These can be combined in any way, such as by concatenation, by adding them together, by forming their product etc, by bit operations directly on bit representations of the second subset of elements, etc. In the end, the result can be represented, one way or another, by a bit string, as can the encryption data element (which might for instance be numerals, ASCII characters; etc.), and thus can be handled arithmetically. The encryption can for instance consist of multiplying the encryption data element by the combined group of numbers, or adding the two, as discussed above in relation to the combining of elements from the second subset. The possibilities are many. The process is often referred to as one-time-padding, and the result is that the combination of e.g. the numerals (the elements from the second subset) becomes encrypted (are hidden from plain view). The secret - the result of the encryption - can be obtained only when the encryption data element and the combination of the group of numbers are known. The encryption (the algorithm) needs not be reversible. Advantageously, it is not, so that neither the second subset nor the encryption data element can be obtained.

To facilitate the method, at least a part of the first set of data elements and/or a part of the second set of data elements and/or a part of the data association are presented via a first user interface. Providing the entire data sets and data association is the most straightforward alternative. A user interface in this context might for instance be a display (by way, for instance, of an internet browser on a computer screen) or a loudspeaker. Thereby, the data sets and the data association can be made available to a user. The user may then provide the selection by simply viewing the data association or by clicking one or more of the images, such as in a browser where each image has been made clickable or otherwise selectable (radio button, checkmarks, touchable etc.) to obtain the second subset. The selecting could also be performed for instance via a voice interface (voice recognition) through microphone means.

Key logging is a wide-spread problem today. In order to avoid logging of the encryption data element, it is advantageous to provide the second subset manually to an evaluation unit which has access to the predefined encryption data element and which performs said evaluating and provides the resulting secret. Alternatively, the encryption data element can be provided to the evaluation unit manually by the user along with the second subset or a part thereof. Such an evaluation unit could advantageously be a calculator-type device, such as a simple calculator or a computing unit specifically designed for the purpose. A mobile phone with implementing appropriately designed software is another example of a unit which could be used for the purpose of evaluating and providing the secret. When the second subset has been entered into the encryption unit, the encryption unit provides the secret in response. The encryption unit might be in operable data connection with the client computer whereby the secret can be transmitted electronically to the client computer, or it could be separated from the client computer and operate independently. By separating the evaluation unit and the client computer, a key logging problem at the client computer is avoided. In this case, a user interface may allow a user to obtain the determined secret, for instance visually or audibly, from the evaluation unit.

A second aspect of the invention provides an authentication method. A user of a client computer wishes to log onto a server computer. The method comprises:

- the server computer receiving an authentication request from a client computer;
- the server computer forming an information representing a first set of data elements and a second set of data elements and a data association between the first set and the second set, through which data association a data element from the first set is uniquely associated with a data element from the second set;
- the server computer providing said information to the client computer;
- the server receiving a first secret in response to providing said information to the client computer;
- the server providing a second secret by evaluating an encryption algorithm that depends on a predefined subset of data elements from the second set and a predefined encryption data element;
- the server comparing the first secret and the second secret and providing a positive authentication indication if the first secret and the second secret are identical.

The client computer provides a secret (first secret) as described previously. This first secret is based on a selection on the client computer among the data elements in the first set of data elements. A first secret is advantageously determined no matter what the selection is. The server computer comprises a predefined subset of data elements, which is a "password" in itself belonging to a user. The first secret (the secret received from the client computer) will be identical to the second secret that the server itself has calculated based on the predefined subset of data elements only when the subset selected at the client computer is identical to the predefined subset. In a banking scenario, a user of the client computer provides some sort of identity, such as a username or an account number. At the server, this identity is tied to a specific predefined subset. In this way, each user can have his favourite selection of data elements from the first set. This will be exemplified later on.

To enhance security, the server may replace the data association with another data association if the first secret and the second secret are not identical. This is advantageous because the combination of the elements in the second subset becomes different even though the same elements from the first set are selected at the client computer. This is greatly increases security because it greatly reduces or eliminates the value of systematic guesswork.

Access may be further limited by ensuring that a positive authentication indication is provided by the server only if an active IP number of the client computer matches an IP number provided at the server computer. Such a property is well known from some existing authentication systems.

In a third aspect, the invention provides computer hardware adapted to carry out a method falling under one of the methods described above in relation to the first and second aspects of the invention. Such computer hardware may be entirely dedicated, such as a programmed ASIC. Alternatively, the hardware may comprise a personal computer loaded with software suitably programmed to make the personal computer operative to facilitate the said methods.

A fourth aspect provides a computer program product comprising software that, when executed on suitable computer hardware, enables the computer hardware to perfom a method according to one of the methods according to the first and second aspects. The software may for instance be recorded on a DVD, a CD, a hard drive, a flash memory or other storage media comprising the product.

**Brief description of the drawings**

Fig. 1 illustrates the exchange of data between a client and a server during an authentication process in accordance with the present invention.

Fig. 2 illustrates to data sets used in a secret provision method in accordance with the present invention.

Fig. 3 illustrates a data association between the two data sets. The data association is created by the server.

Fig. 4 illustrates a system in which an authentication process is in progress.

Fig. 5 is a flow chart that illustrates the process from initiation of an authentication process to the authentication decision.

**Description of selected embodiments**

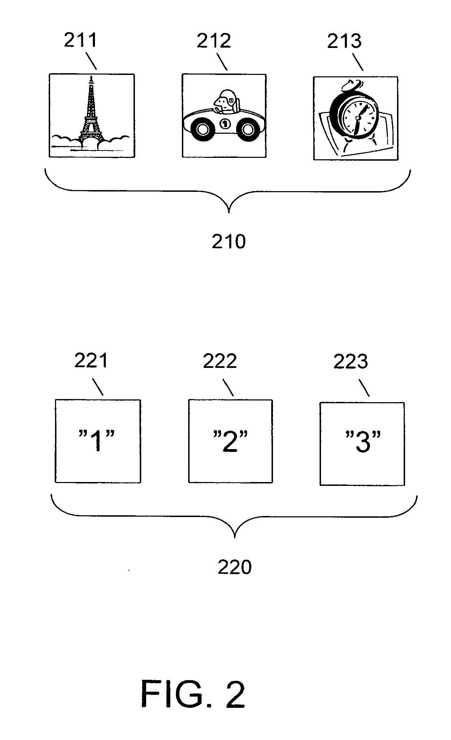

In the following, the invention will be described by way of examples. The invention will be described using examples wherein the first data set is a set of images and the second set of data elements consists of integers. The data association is a numbering of the images in the first data set with the integers from the second data set. Fig. 2 illustrates the first data set 210 consisting of three images 211 (the Eiffel tower), 212 (a car), 213 (a clock). Fig. 2 also illustrates the second data set 220 consisting of the integer "1" (221), the integer "2" (222) and the integer "3" (223). In a real-life scenario, the number of images is "high", such as 10 or 50 or 100.

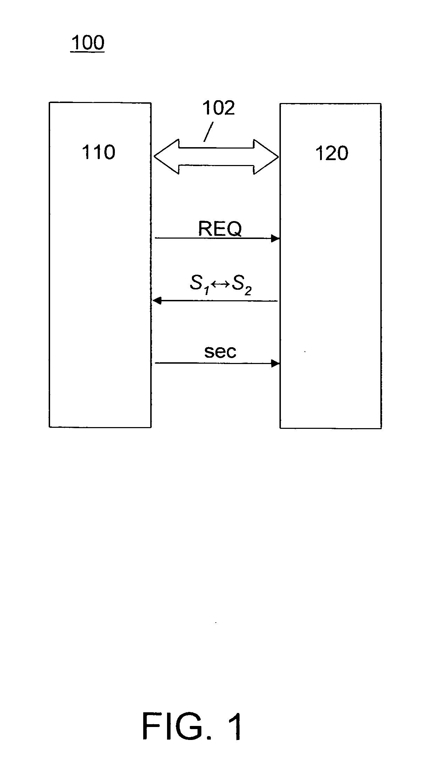

Fig. 1 illustrates a client-server system comprising a client computer 110 and a server computer 120. In the present scenario, a user wishes to log in on the server. The two computers are connected with a network connection 102 over a data network. The data network may for instance comprise a connection over internet, a wireless connection and so on. In the present example, the client and server communicate using the HTTP protocol.

To initiate an authentication process to authorize a user of client computer 110 to use information on server computer 120, the client 110 sends a request "REQ" to the server 120, as illustrated on Fig. 1. The request comprises identification information, such as a user ID and/or a password, or other identification. The request causes the server to provide the first data set $S_1$ (images) and the second data set $S_2$ (integers) and a data association $S_1 \leftrightarrow S_2$ relating the images to the integers. The data association ("DA") is randomly produced by the server. The user together with the client computer create a secret ("sec"), which is sent to the server. To decide whether to authorize the user, the server compares the received secret to a secret that it itself has created based on the identification information from REQ and the data association, DA. If the two secrets agree, the user is authorized to access information on the server.

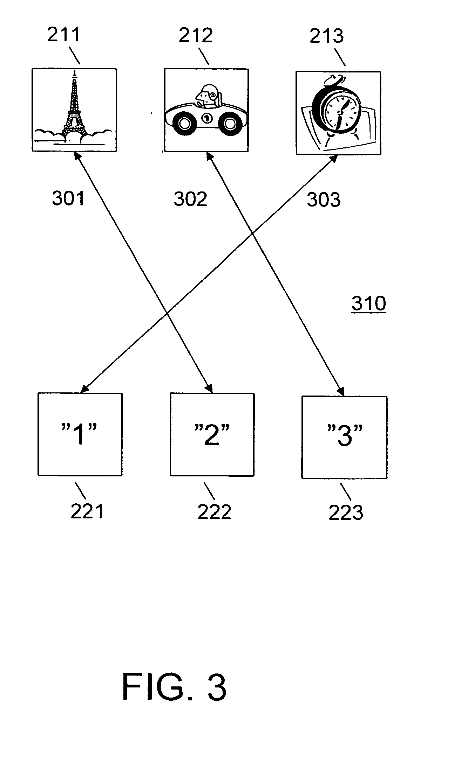

Fig. 3 illustrates a data association 310 between the first and second data sets from Fig. 2. After having received the request from the client, the server provides the data association, consisting of associations 301, 302 and 303. Association 301 associates the tower 211 with the integer "2", association 302 associates the car with the integer "3", and the association 303 associates the clock with the integer "1".

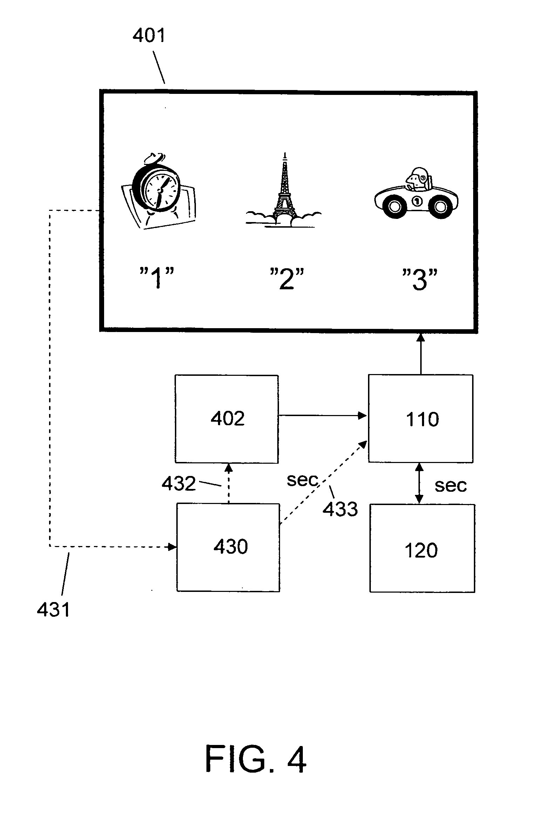

The data sets 210 and 220 and the data association 310 are transmitted to the client. In order to allow the user to proceed with the authentication attempt, the transmitted data is displayed at a display connected to the client computer. Fig. 4 illustrates the client computer 110 connected to a display 401 and a keyboard 402.

During the authentication process, the display shows the association, for instance as illustrated on the display 401 in Fig. 4, where the integers are shown in increasing order and the associated images are shown above them on display 401 connected to the client computer 110. The presentation type and shape can be selected as desired, as long as the data association is discernible. The numbers could also be left out and appear once a selection of images has been made by the user.

The actual authentication is based on two mechanisms. The first is that the user defines the final "passkey" by memorizing a sequence of pictures. In this example, we will assume that a passkey consists of two pictures, in a certain order. The user may for instance have chosen a passkey consisting of "car" and "tower", in that order. This might have significance to the user (or not). The user might think of "taking the car to the Eiffel tower", which might be his favourite pastime. The user then identifies the associated numbers, which are "3" and "2", in that order. These numbers, including their order, will be referred to as "resulting associated numbers", or RANs.

To obtain the key, the user obtains a secret by having a predefined algorithm be performed based on the identified numbers. Alternatively, as discussed above, the images might be clickable and once the user has clicked "car" and "tower", the "3" and "2" are displayed with an indication of their correct order.

As a second mechanism, the user also has a pin number (PN) which is used in the providing of the secret. The pin number is known to both the user and the server.

An example of an algorithm for obtaining the secret consists of concatenating the numbers and adding the pin number to the result. As an example, it will be assumed now that the user's pin number is "51". The concatenated numbers related to "car" and "tower" is "32", and adding the pin number gives the result "83", which is the secret in the case of the data association shown in Fig. 3 and 4. The pin number acts as a pad to hide/encrypt the concatenated numbers.

The user then enters the secret on the keyboard 402, and the secret is submitted to the server. The server performs the exact same calculation. Via the identification information (such as the aforementioned user ID or account number), the server knows who the user is and thus knows which pin number to use in its calculation of the secret. It knows the "passkey" already ("car" and "tower", in that order), and calculates the result "83" using the data association that it itself has provided. The server then compares the secret (result) to the one provided by the user. In this example, the two are identical, and the user is authorized. In case the user had picked "tower" and then "car", the concatenated result is "23" and the resulting secret is "74", which is not identical to the result "83" calculated by the server. The server would deny access. As another example, selection of "car" and "clock", in that order, would yield a result of "82", which is also incorrect. Access would consequently be denied.

The example above of an algorithm is a simple one. To increase security, the algorithm can for instance be modified. Calculating

$$PN^3 + PN^2$$

where the exponents are the RANs resulting from the selection of "car" and "tower" as discussed above and shown in Fig. 3 and 4. The selection of algorithm helps to hide the pin number and the RANs. These aspects are well known in the field of encryption, where the pin number is often referred to as a "one-time-pad". In the example above, the algorithm evaluates to 135252.

4-digits pin numbers are commonly used and will increase security. Longer pin numbers increase security further. With a pin number of 5153, as an example, the formula above evaluates to 136856269986. To obtain a "short" secret, the result above may be shortened for instance by keeping only the first 6 digits of the result, such as the initial six digits. The algorithm would therefore further include the step of selecting the first 6 digits. The resulting client secret would be 136856, which the user would then provide to the client computer, which in turn would transmit this secret to the server. The server would perform the exact same calculation and perform the comparison as usual. In case of coincidence between the client secret and the server secret, the user would be authorized.

A purpose of the invention is to make it difficult for key loggers to obtain the pin number. Providing the secret by having the client computer perform the calculation based on a pin number entered via a keyboard would defeat the purpose. Instead, a separate encryption computer ("evaluation unit") is used. Such a unit 430 is illustrated in Fig. 4. It may for instance take the shape of a conventional calculator, though specialized "on the inside". It is aware of the algorithm used to provide secrets. To obtain a secret, the user enters the RANs into the unit, as illustrated by the dashed line 431 in Fig. 4. The unit then provides the secret, for instance via a display. The pin number can be entered by the user at the same time, or it can be stored in the unit more permanently. The former solution is clearly more desirable from a security point of view. Once the unit has provided the secret, the secret is entered into the client computer, either via a manual entering by the user, as illustrated by line 432, or automatically to the client as illustrated by line 433, for instance via a USB connection or wireless connection, both of which circumvent the need for entering the pin number via the keyboard which is potentially subject to key logging.

Ideally, the algorithm is complicated and an electronic evaluation unit is therefore indispensable.

The example above illustrates how two images are selected out of three available images (the two images form a proper subset of the set consisting of the three images). If there were 100 images to choose from, it would still be advantageous to use just a "small" number of images - simply because it is more difficult to remember a higher number of images.

Some authentication processes rely in part on user-dependent authorization files stored on the client computer. Such files are needed when attempting to access the desired server. The use of such files is well known. Such files can also be used with the present invention. By making the authorization file available to the evaluation unit, the information in the file can be used in the algorithm to provide increased security by introducing more entropy into the secret.

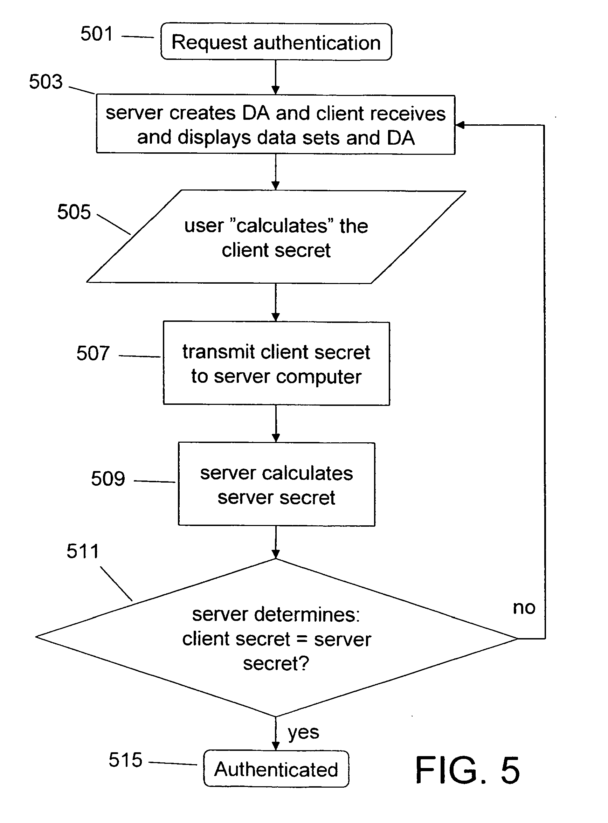

An example of an entire authentication process is illustrated in Fig. 5. First, the client makes a request 501 to the server after a user's initiation of the authentication process. The server provides the data sets and a data association, the server having created the latter in step 503. They are received at the client computer in step 503 and displayed appropriately as discussed previously. The user now takes the steps required to obtain the client secret, which includes selecting images and calculating the client secret, in step 505. The client secret is entered into the client computer and transmitted 507 to the server. The server also calculates 509 a secret, the server secret, and compares the client secret and the server secret in step 511. If they are identical, the user is authorized (authenticated) to access the server, in step 515. Otherwise, the user is rejected and may get another chance to provide the correct client secret. To ensure that no information is reused, for instance in an attempt to guess the "passkey" (the "passkey" images and their correct sequence, if applicable), the server computer provides a new data association, in step 503, at each login attempt. This ensures that systematic guessing is hardly available to an intruder.

The person skilled in the art will recognize that the described features can be combined, where feasible, in a number of ways as design options, within the scope of the following claims.

**Claims**

1. A method for providing a secret at a client computer for use in an authentication process, comprising:

   • the client computer receiving from a server computer, information representing

      ○ a first set of data elements, and
      ○ a second set of data elements, and
      ○ a data association between the first set and the second set, through which data association a data element from the first set is uniquely associated with a data element in the second set;

   • providing a first subset comprising a selection of data elements from the first set of data elements;
   • the client computer providing a second subset of data elements, the second subset comprising those data elements in the second set of data elements that are associated with the data elements in the first subset via said data association;
   • providing the secret by evaluating an encryption algorithm that depends on an element from the second subset and a predefined encryption data element;

   **characterised in that**:

   • at least a part of said data association is presented via a first user interface;
   • said provision of a selection of data elements from the first set of data elements is performed by a user in response to said presenting.

2. A method according to claim 1, wherein the second subset is provided to an evaluation unit which has access to the predefined encryption data element and which performs said evaluating and provides the resulting secret, wherein the encryption unit is either

   • in operable data connection with the client computer whereby the secret can be transmitted electronically to the client computer, or
   • separated from the client computer and comprises a user interface through which the secret can be presented to the user.

3. A method according to claim 2, wherein the evaluation unit can operate independently of the client computer.

4. A method for providing an authentication indication, comprising:

   • a server computer receiving an authentication request from a client computer;
   • the server computer forming an information representing a first set of data elements and a second set of data elements and a data association between the first set and the second set, through which data association a data element from the first set is uniquely associated with a data element from the second set;
   • the server computer providing said information to the client computer;
   • the server receiving a first secret in response to providing said information to the client computer;

   **characterised by**:

   • the server providing a second secret by evaluating an encryption algorithm that depends on a predefined subset of data elements from the second set and a predefined encryption data element;
• the server comparing the first secret and the second secret and providing a positive authentication indication if the first secret and the second secret are identical.

5. A method according to claim 4, further comprising:

   • the server replacing said data association with another data association if the first secret and the second secret are not identical.

6. A method according to one of claims 4 or 5, wherein the a positive authentication indication is provided by the server only if an active IP number of the client computer matches an IP number provided at the server computer.

7. A method according to one of claims 1-6, wherein

   • the first set of data elements consists of images, and/or
   • the second dataset consists of ASCII characters.

8. A method according to one of claims 1-7, wherein the first subset is a proper subset of the first set of data elements.

9. Computer hardware comprising means for carrying out all the steps of at least one method in accordance with one of claims 1-8.

10. Computer program product comprising software that, when executed on a suitable computer hardware, enables the computer hardware to carry out all the steps of at least one method in accordance with one of claims 1-8.

**Patentansprüche**

1. Verfahren zur Bereitstellung einer geheimen Information an einem Client-Computer zur Verwendung bei einem Authentifizierungsverfahren, umfassend

   • den Erhalt von Informationen von einem Server-Computer am Client-Computer, die darstellen

   ○ einen ersten Satz Datenelemente und
   ○ einen zweiten Satz Datenelemente und
   ○ eine Datenverknüpfung zwischen dem ersten und dem zweiten Satz, durch die ein Datenelement des ersten Satzes eindeutig mit einem Datenelement des zweiten Satzes verknüpft ist;

• Bereitstellen einer ersten Teilmenge, umfassend eine Auswahl an Datenelementen des ersten Satzes Datenelemente;
• Bereitstellen einer zweiten Teilmenge Datenelemente durch den Client-Computer, wobei die zweite Teilmenge die Datenelemente des zweiten Satzes Datenelemente umfasst, die mittels der Datenverknüpfung mit den Datenelementen der ersten Teilmenge verknüpft sind;
• Bereitstellen der geheimen Information durch Bewerten eines Verschlüsselungsalgorithmus, der von einem Element der zweiten Teilmenge und einem vorbestimmten Verschlüsselungsdatenelement abhängig ist;

**dadurch gekennzeichnet, dass:**

   • mindestens ein Teil der Datenverknüpfung über eine erste Benutzerschnittstelle präsentiert wird;
   • wobei die Bereitstellung einer Auswahl an Datenelementen des ersten Satzes Datenelemente von einem Benutzer als Reaktion auf die Präsentation durchgeführt wird.

2. Verfahren nach Anspruch 1, wobei die zweite Teilmenge an einer Bewertungseinheit bereitgestellt wird, die Zugriff auf das vorbestimmte Verschlüsselungsdatenelement hat und die die Bewertung durchführt und die resultierende geheime Information bereitstellt, wobei die Verschlüsselungseinheit entweder

   • in betriebsfähiger Datenverbindung mit dem Client-Computer ist, worüber die geheime Information elektronisch zu dem Client-Computer übertragen werden kann, oder
   • von dem Client-Computer getrennt ist und eine Benutzerschnittstelle umfasst, über die die geheime Information dem Benutzer präsentiert werden kann.

3. Verfahren nach Anspruch 2, wobei die Bewertungseinheit unabhängig von dem Client-Computer betrieben werden kann.

4. Verfahren zur Bereitstellung einer Authentifizierungsanzeige, umfassend:

   • Erhalt einer Authentifizierungsanfrage von einem Client-Computer an einem Server-Computer;
   • Bilden einer Information durch den Server-Computer, die einen ersten Satz Datenelemente und einen zweiten Satz Datenelemente und eine Datenverknüpfung zwischen dem ersten Satz und dem zweiten Satz darstellt, durch die ein Datenelement des ersten Satzes eindeutig mit einem Datenelement des zweiten Satzes verknüpft ist;
• Bereitstellen der Information durch den Server-Computer am Client-Computer;
• Erhalt einer ersten geheimen Information am Server als Reaktion auf die Bereitstellung der Information am Client-Computer;

**dadurch gekennzeichnet, dass:**

• der Server eine zweite geheime Information durch Bewerten eines Verschlüsselungsalgorithmus bereitstellt, der von einer vorbestimmten Teilmenge Datenelemente des zweiten Satzes und einem vorbestimmten Verschlüsselungsdatenelement abhängig ist;
• Vergleichen der ersten geheimen Information und der zweiten geheimen Information durch den Server und Bereitstellen einer positiven Authentifizierungsanzeige, wenn die erste geheime Information und die zweite geheime Information identisch sind.

5. Verfahren nach Anspruch 4, weiterhin umfassend:

• Ersetzen der Datenverknüpfung durch eine andere Datenverknüpfung durch den Server, wenn die erste geheime Information und die zweite geheime Information nicht identisch sind.

6. Verfahren nach einem der Ansprüche 4 oder 5, wobei die positive Authentifizierungsanzeige von dem Server nur bereitgestellt wird, wenn eine aktive IP-Nummer des Client-Computers einer IP-Nummer entspricht, die von dem Server-Computer bereitgestellt wird.

7. Verfahren nach einem der Ansprüche 1-6, wobei

• der erste Satz Datenelemente aus Bildern besteht und/oder
• der zweite Datensatz aus ASCII-Zeichen besteht.

8. Verfahren nach einem der Ansprüche 1-7, wobei die erste Teilmenge eine echte Teilmenge des ersten Satzes Datenelemente ist.

9. Computerhardware, umfassend Mittel zum Ausführen aller Schritte mindestens eines Verfahrens nach einem der Ansprüche 1-8.

10. Computerprogrammprodukt, umfassend Software, die bei der Ausführung auf einer geeigneten Computerhardware die Computerhardware aktiviert, alle Schritte mindestens eines Verfahrens nach einem der Ansprüche 1-8 durchzuführen.

**Revendications**

1. Méthode de fourniture sur un ordinateur client d'un secret destiné à être utilisé dans un processus d'authentification, comprenant :

• réception par l'ordinateur client, en provenance d'un ordinateur serveur, d'informations représentant

○ un premier ensemble d'éléments de données, et
○ un deuxième ensemble d'éléments de données, et
○ une association de données entre le premier ensemble et le deuxième ensemble, association de données au travers de laquelle un élément de données provenant du premier ensemble est associé de manière unique avec un élément de données du deuxième ensemble ;

• fourniture d'un premier sous-ensemble comprenant une sélection d'éléments de données provenant du premier ensemble d'éléments de données ;
• fourniture par l'ordinateur client d'un deuxième sous-ensemble d'éléments de données, le deuxième sous-ensemble comprenant les éléments de données du deuxième ensemble d'éléments de données qui sont associés aux éléments de données du premier sous-ensemble via ladite association de données ;
• fourniture du secret par évaluation d'un algorithme de cryptage qui dépend d'un élément provenant du deuxième sous-ensemble et d'un élément de données de cryptage prédéfini ;

**caractérisée en ce que :**

• au moins une partie de ladite association de données est présentée via une première interface utilisateur ;
• ladite fourniture d'une sélection d'éléments de données provenant du premier ensemble d'éléments de données est effectuée par un utilisateur en réponse à ladite présentation.

2. Méthode selon la revendication 1, dans laquelle le deuxième sous-ensemble est fourni à une unité d'évaluation qui a accès à l'élément de données de cryptage prédéfini et qui effectue ladite évaluation et fournit le secret qui en résulte, dans laquelle l'unité de cryptage est soit

• reliée par une connexion de données fonctionnelle à l'ordinateur client de manière à pouvoir transmettre le secret à l'ordinateur client par voie électronique, ou
• séparée de l'ordinateur client et comprend une interface utilisateur au travers de laquelle le secret peut être présenté à l'utilisateur.

3. Méthode selon la revendication 2, dans laquelle l'unité d'évaluation peut fonctionner indépendamment de l'ordinateur client.

4. Méthode de fourniture d'une indication d'authentification, comprenant :

   • réception par un ordinateur serveur d'une demande d'authentification provenant d'un ordinateur client ;
   • formation par l'ordinateur serveur d'une information représentant un premier ensemble d'éléments de données et un deuxième ensemble d'éléments de données et une association de données entre le premier ensemble et le deuxième ensemble, association de données au travers de laquelle un élément de données provenant du premier ensemble est associé de manière unique à un élément de données provenant du deuxième ensemble ;
   • fourniture par l'ordinateur serveur de ladite information à l'ordinateur client ;
   • réception par le serveur d'un premier secret en réponse à la fourniture de ladite information à l'ordinateur client ;

   **caractérisée en ce que :**

   • le serveur fournit un deuxième secret par évaluation d'un algorithme de cryptage qui dépend d'un sous-ensemble d'éléments de données prédéfini provenant du deuxième ensemble et d'un élément de données de cryptage prédéfini ;
   • le serveur compare le premier secret au deuxième secret et fournit une indication d'authentification positive si le premier secret et le deuxième secret sont identiques.

5. Méthode selon la revendication 4, comprenant également :

   • remplacement par le serveur de ladite association de données par une autre association de données si le premier secret et le deuxième secret ne sont pas identiques.

6. Méthode selon l'une des revendications 4 ou 5, dans laquelle l'indication d'authentification positive n'est fournie par le serveur que si un numéro IP actif de l'ordinateur client correspond à un numéro IP fourni sur l'ordinateur serveur.

7. Méthode selon l'une des revendications 1 à 6, dans laquelle

   • le premier ensemble d'éléments de données est constitué d'images, et/ou
   • le deuxième ensemble de données est constitué de caractères ASCII.

8. Méthode selon l'une des revendications 1 à 7, dans laquelle le premier sous-ensemble est un sous-ensemble inclus dans le premier ensemble d'éléments de données.

9. Matériel informatique comprenant un moyen pour réaliser toutes les étapes d'au moins une méthode selon l'une des revendications 1 à 8.

10. Produit programme informatique comprenant un logiciel qui, lorsqu'il est exécuté sur un matériel informatique approprié, permet au matériel informatique de réaliser toutes les étapes d'au moins une méthode selon l'une des revendications 1 à 8.

100

FIG. 1

211 212 213

210

221 222 223

"1" "2" "3"

220

# FIG. 2

FIG. 3

FIG. 4

501 — Request authentication

503 server creates DA and client receives and displays data sets and DA

505 user "calculates" the client secret

507 — transmit client secret to server computer

509 — server calculates server secret

511 server determines: client secret = server secret?

no

yes

515 — Authenticated

FIG. 5

**EP 2 150 915 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6148496 A
- US 20040080529 A
- US 20040133778 A